Europäisches Patentamt

European Patent Office

Office européen des brevets

(11) Publication number: **0 369 077**
**A1**

(12) # EUROPEAN PATENT APPLICATION

(21) Application number: 88310824.3

(22) Date of filing: 16.11.88

(51) Int. Cl.⁵: **B60T 7/12, B60R 19/32, F16F 9/50**

(43) Date of publication of application:
23.05.90 Bulletin 90/21

(84) Designated Contracting States:
DE FR GB IT

(71) Applicant: Xiaosheng, Zhao
Room 502 Danyuan 3 Building 31
Tanguxiaoqu Changanqu Shijiazhuang(CN)

(72) Inventor: Xiaosheng, Zhao
Room 502 Danyuan 3 Building 31
Tanguxiaoqu Changanqu Shijiazhuang(CN)

(74) Representative: Palmer, Roger et al
PAGE, WHITE & FARRER 54 Doughty Street
London WC1N 2LS(GB)

(54) **An anti-impact device for vehicles.**

(57) An anti-impact device for vehicles includes a contact plate (2), an automatic brake linkage (4) and bumper cylinders (3). The two ends of the automatic brake linkage connect respectively with the contact plate (2) as well as the levers (18,19) of the brake and the clutch in a vehicle. The contact plate on receiving an impact can automatically brake and disconnect the clutch. The bumper cylinders (3) are mounted on a frame (1) and the piston rods (7) are fixed on the contact plate (2) which effect to absorb the impact when the vehicle is in collision.

Fig.2

EP 0 369 077 A1

## An Anti-impact Device for Vehicles

The invention relates an anti-impact device for vehicles.

The vehicles in their travels always bring traffic accidents. In general, the anti-impact device of a vehicle is a so-called bumper bar fixed in the front of a vehicle. The bumper bar will loss its protecting performance when there is a very large impact acting on the vehicle since such a bumper bar can endure only a limited impact load. This results traffic deathes for drivers and vehicles damage.

An object of the present invention is to provide an anti-impact device for vehicles, which has an automatic brake linkage connected with levers of the brake and the clutch in a vehicle, it is able to drive the linkage fixed on a contact plate to cause an automatic brake for the vehicle and a disengagement of the clutch during a traffic accident. The device according to the present invention has also bumper cylinders for absorbing the impact arisen in the collision of vehicles.

By employing the anti-impact device for vehicles according to the present invention, when collisions occur in the travellings of vehicles the anti-impact device may automatically brake the vehicles and disconnect their power supplies independent from the operation of drivers. Moreover, the bumper cylinders may reduce the impact of vehicles. The device is particularly suitable in the case of a driver having been wounded or frightened or being unskilledful in the operation so that the driver cannot brake the vehicle correctly and timely by a pedal.

An adoption of the anti-impact device may greatly reduce traffic person deathes and vehicles damage in the traffic accidents.

A detail description of the device according to the present invention will be given in the following with reference to the accomanying drawings, in which:

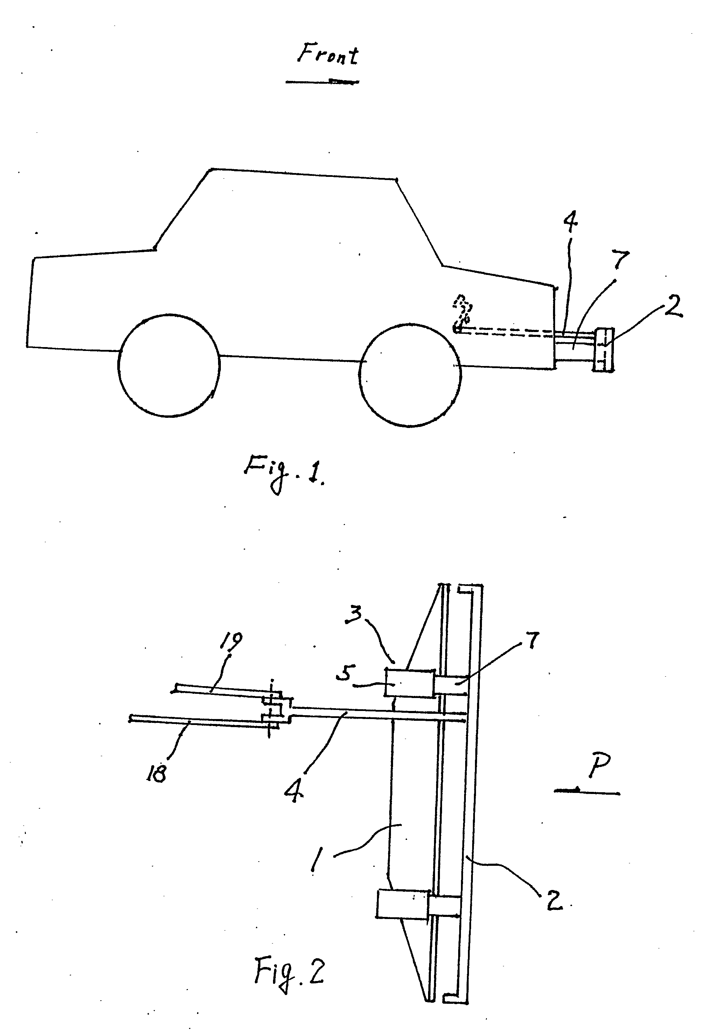

Figure 1 is a schematic view of the device according to the present invention;

Figure 2 is a partial top view of the device in figure 1; and

Figure 3 is an enlarged sectional view of the bumper cylinder appered in figure 1.

As shown in the figures, the anti-impact device for vehicles according to the present invention includes a contact plate 2, an automatic brake linkage 4 and bumper cylinders 3 wherein the contact plate 2 is made of alloy materials or of plastic materials in high strength and the width of the contact plate is substantially the same as the width of a vehicle. One end of the automatic brake linkage 4 is fixed on the contact plate 2 and its other end may be made as a fork with two legs connected respectively to a brake pedal lever (or brake valve) 18 and a clutch pedal lever 19. When a traffic accident occurs and the contact plate is impacted, the automatic brake linkage 4 fixed on the contact plate 2 will move backwards (p-direction) and drive the pedal levers 18, 19 of the brake and the clutch causing the brake to take action and the clutch to be disengaged.

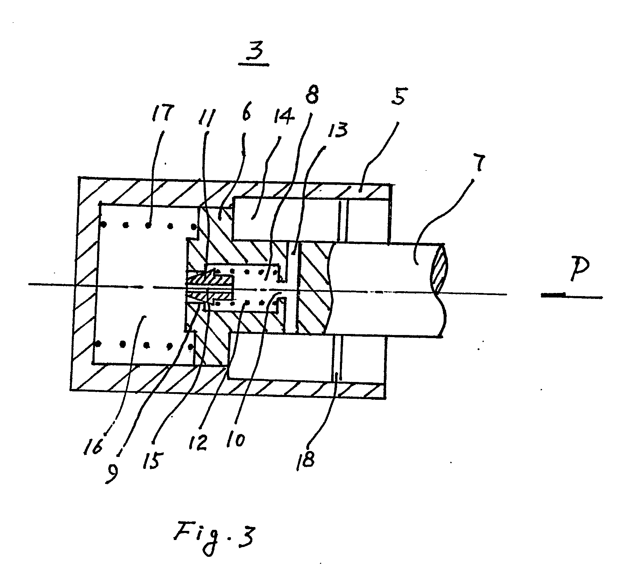

Two cylinder bodies 5 of the bumper cylinders 3 are mounted on two sides in the front of the frame 1 with the piston rods 7 of the bumper cylinders connecting and supporting the contact plate 2. The structure of the bumper cylinder 3 shown in figure 3 includes a cylinder body 5, a piston 6 and a piston rod 7. The piston 6 has a cavity 8 which has on its one end a valve seat 9 and on its other end a hole 10. A conical valve 11 with an oil hole 15 is mounted in the cavity 8 and the conical valve 11 is pushed against the valve seat 9 by a spring 12 to bring the valve in a closed position. The hole 10 and a passage 13 of the piston rod 7 provide a communication between the cavity 8 and a low-pressure chamber 14. A gosket 18 is disposed between the piston rod 7 and the oil cylinder body 5. A spring 17 is seated in a high-pressure chamber 16 filled with the oil. When the contact plate 2 and the piston rod 7 receive a smaller impact, the oil pressure formed in the high-pressure chamber 16 is not enough to open the conical valve 11 and the oil flows into the cavity 8 through the oil hole 15 on the valve; when the impact acting on the contact plate 2 is enough large and reaches a certain value, the piston 6 compresses the oil in the high-pressure chamber 16 to form a high-pressure oil which will open the conical valve 11 such that the oil will pass through the valve seat 9, cavity 8 and passage 13 then flows into the low-pressure chamber 14 to achieve a buffering action in absorbing the impacts of vehicles. In addition, the spring 17 may also buffer these impacts.

When vehicle provided with the anti-impact device according to the present invention is in collision, the automatic brake linkage will brake the vehicle and disengage the clutch automatically, meanwhile the bumper cylinder will absorb the impact of the vehicle and protect itself from injury. Moreover, the anti-impact device according to the present invention can be repaired or replaced depend on the destruction degree of the device when it has been impacted.

The device of the present invention may have a variety of variations according to the sizes of vehicles, which will be considered in the scope of the present invention.

## Claims

1. An anti-impact device for vehicles, characterized in that the device includes a contact plate (2), an automatic brake linkage (4) and at least two bumper cylinders (3); one end of the automatic brake linkage (4) is fixed on the contact plate (2) and its other end shaped as a fork is connected respectively to a brake lever (18) and a clutch lever (19) of a vehicle and that the contact plate (2) on receiving an impact will push the linkage (4) to cause the brake to take action and the clutch to be disengaged; the bodies (5) of the bumper cylinders is fixed on the frame (1) of vehicle and the piston rod (7) is fixed on the contact plate (2) which effects a compression to the bumper cylinders (3) when it is impacted.

2. A device according to claim 1, characterized in that the piston (6) of said bumper cylinder (3) has a cavity (8) in which there are provided with a conical valve (11) having an oil hole (15) and a spring (12), and that there is a passage (13) on the piston rod (7) which connectes the cavity (8) to a low-pressure chamber (14); there is provided a spring (17) in a high-pressure chamber (16) and a gesket (18) in the cylinder body (5).

Front

Fig. 1.

P

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 022 891 (LAU TIN LOI) * Page 1, line 121 - page 2, line 70; figures 1,3 * --- | 1 | B 60 T 7/12 B 60 R 19/32 F 16 F 9/50 |
| Y | US-A-2 584 078 (HSU HSI-YU) * Column 1, line 40 - column 2, line 51; figures 1,4 * --- | 1 | |
| A | GB-A-2 196 720 (HONDA) * Page 3, lines 43-99; figures 5-9 * --- | 1,2 | |
| A | FR-A-2 205 150 (ALLINQUANT) --- | 1,2 | |
| A | FR-A-1 055 144 (SKRONSKI) --- | 1 | |
| A | US-A-3 968 862 (GORGES) ----- | | |

|  |
|---|
| **TECHNICAL FIELDS SEARCHED (Int. Cl.5)** |
| B 60 T 7/00 B 60 R 19/00 F 16 F 9/00 |

The present search report has been drawn up for all claims

| Place of search | Date of completion of the search | Examiner |
|---|---|---|
| THE HAGUE | 17-07-1989 | HARTEVELD C.D.H. |